# FASCICULE DE BREVET EUROPEEN

(11) **EP 3 982 868 B1**
(45) Date de publication et mention de la délivrance du brevet: **07.08.2024**
(21) Numéro de dépôt: 20731129.1
(22) Date de dépôt: 11.06.2020
(51) Int. Cl.: A61C 8/00

(54) **PIECE IMPLANTAIRE BIO-FONCTIONNALISEE**
BIOFUNKTIONALISIERTES IMPLANTATTEIL
BIO-FUNCTIONALISED IMPLANT PART

(30) Priorité: 13.06.2019 FR 1906331
(43) Date de publication de la demande: 20.04.2022
(73) Titulaire: Global D, 69530 Brignais (FR)
(72) Inventeur: SCHNECK, Eric, 69003 Lyon (FR); CASIMIRO, Roméo, 69230 Saint Genis Laval (FR)
(74) Mandataire: Corret, Hélène
(86) Numéro de dépôt international: PCT/EP2020/066245
(87) Numéro de publication internationale: WO 2020/249702

(56) Documents cités:
- WO-A1-03/055406
- WO-A1-2011/054119
- WO-A2-01/58374
- CN-A- 102 525 672
- IT-A1- UB20 155 412

## Description

La présente invention concerne le domaine technique des implants et plus particulièrement des pièces utilisées en association avec ces implants, de manière temporaire ou définitive.

On rappelle qu'un implant dentaire comporte un corps d'ancrage fileté qui est mis en place par vissage dans une cavité de la mâchoire, notamment réalisée par un forage. Est mise ensuite en place une vis de cicatrisation.

Ultérieurement, après intégration de l'implant dans l'os, la vis de cicatrisation est retirée et un pilier prothétique est fixé dans l'implant. Ce pilier compense l'épaisseur de la muqueuse et permet la fixation d'un élément prothétique proprement dit.

Tous les éléments sont réalisés en un matériau biocompatible, par exemple en Titane ou en un alliage de Titane.

On peut également utiliser des implants solidaires d'un pilier prothétique, tels que par exemple décrits dans le document FR 2 943 242.

Ces implants ont été perfectionnés au cours des années pour améliorer leur intégration osseuse, notamment en gravant la surface du corps d'ancrage.

L'invention part du constat qu'une bonne intégration osseuse de l'implant dans les mois suivant sa mise en place n'évite pas des problèmes ultérieurs de descellement. Ceci est dû à une dégradation de l'os péri-implantaire, notamment du fait de la présence de bactéries qui s'introduisent entre l'implant et les tissus épithélial et conjonctif.

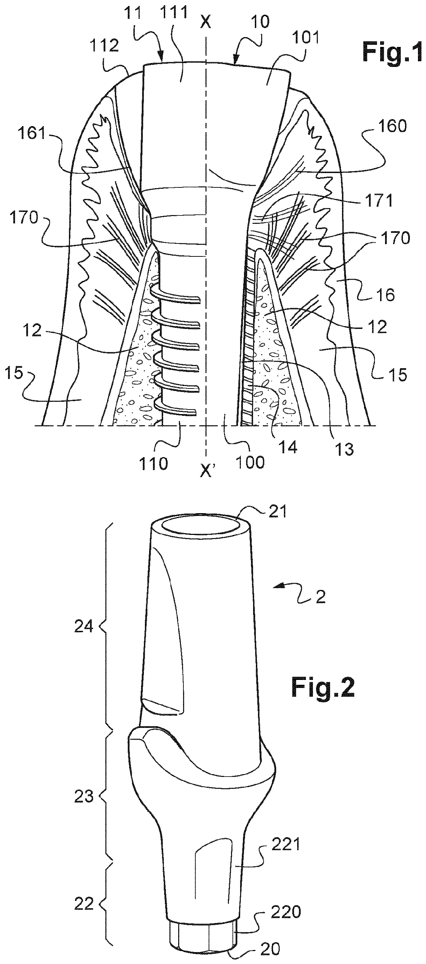

L'importance du système d'attache des structures muqueuses à la périphérie de la dent va être rappelée en référence à la figure 1.

Cette figure est une vue en coupe de la gencive permettant de comparer la situation d'une dent naturelle 10 (côté droit de la figure) à celle d'un implant 11 ancré dans l'os (côté gauche de la figure) .

L'implant 11 comporte un corps d'ancrage 110 fileté. Un pilier prothétique 111 est solidaire du corps d'ancrage.

Un élément prothétique 112 est par ailleurs fixé sur le pilier 111. La dent 10 comporte une racine 100 et une couronne 101.

Le corps d'ancrage 110 de l'implant comme la racine 100 de la dent sont insérés dans l'os 12 de la mâchoire.

Dans le cas d'une dent naturelle, la racine est fixée à l'os par l'intermédiaire d'une couche de cément 13 qui s'étend jusqu'à la couronne 101 et par le ligament alvéolo-dentaire 14.

Bien entendu, la couche de cément qui recouvre la racine de la dent n'est pas présente sur l'implant. C'est également le cas pour le ligament alvéolo-dentaire.

L'os 12 est entouré par une couche de tissu conjonctif 15, elle-même recouverte d'une couche d'épithélium 16.

La figure 1 montre tout d'abord que le tissu conjonctif comporte des fibres orientées.

Pour une dent naturelle, on distingue deux types de fibres : les fibres 170 qui s'accrochent sur l'os 12 et qui sont orientées selon un angle inférieur à 45° environ par rapport à l'axe X-X' de la dent ou de l'implant et les fibres 171 qui s'étendent sensiblement radialement et qui s'accrochent sur la couche de cément présente sur la dent, au-delà de l'os 12.

On comprend donc que ces fibres radiales 171 ne sont pas présentes sur l'implant puisque celui-ci ne comporte pas de cément.

La figure 1 confirme que, pour un implant, seules sont présentes des fibres 170, toutes ces fibres s'accrochant sur la surface de l'os 12.

On sait que, pour une dent, ces fibres 171 orientées sensiblement perpendiculairement à l'axe de la dent permettent d'assurer une barrière protectrice étanche, en combinaison avec l'épithélium de jonction 160 qui vient s'insérer à l'interface entre la racine 100 et sa couronne 101.

Pour un implant, l'épithélium de jonction 161 est bien présent mais son accroche sur le pilier 111 de l'implant n'est pas très résistante et ce d'autant plus en l'absence de fibres orientées sensiblement perpendiculairement à l'axe de l'implant.

Ainsi, la cicatrisation autour d'un implant conduit à une structure des tissus conjonctifs qui est différente de celle observée avec une dent naturelle.

Ceci conduit également à des inconvénients avant la mise en place sur l'implant du pilier implantaire, c'est-à-dire en présence d'une vis de cicatrisation. En effet, le même phénomène se produit avec la vis de cicatrisation, aucune fibre s'étendant sensiblement radialement ne se créant au niveau de cette vis de cicatrisation.

On peut alors observer, lors de la dépose de cette vis, une contraction des fibres élastiques qui conduit à la réduction de l'orifice d'accès à la connexion avec l'implant et qui pose donc problème lors de la mise en place du pilier implantaire.

L'objectif principal de l'invention est de réduire les risques de descellement d'un implant au cours du temps en évitant l'introduction de bactéries.

Toutes les solutions connues concernent l'implant et s'attachent à différencier la surface extérieure de celui-ci en prévoyant des zones de structures différentes.

Ainsi, le document WO2011054119 décrit un implant dont la portion d'ancrage, destinée à être entourée par de l'os après implantation, comporte des états de surface différenciés.

Le document WO0158374 décrit un implant qui est conçu pour favoriser, selon les zones de l'implant, la croissance de l'os ou des tissus mous.

De même, le document ITUB20155412 décrit un implant qui comporte, dans une portion intermédiaire, une surface modifiée obtenue par polissage qui est conçue pour faciliter l'intégration de l'implant dans les tissus mous.

Au contraire, l'invention part du constat que les piliers prothétiques comme les vis de cicatrisation sont jusqu'ici utilisés uniquement pour leur fonction mécanique et qu'il est possible et souhaitable de leur conférer d'autres fonctions, sans que leur conception ne soit modifiée, en termes de structure générale ou de dimensionnement.

Le document CN102525672 décrit un pilier destiné à être fixé dans un implant et dont l'objectif est de réduire la plaque dentaire. Il comporte, dans une portion intermédiaire, une zone conçue pour réduire l'adhésion des tissus mous et une autre pour favoriser la croissance des cellules gingivales.

L'invention propose de favoriser la re-création autour du pilier prothétique ou d'une vis de cicatrisation d'un tissu épithélial et/ou conjonctif qui sont les plus proches possible du tissu épithélial et/ou conjonctif présents autour d'une dent naturelle.

Ceci permet de recréer autour du pilier et/ou de la vis de cicatrisation une barrière contre l'introduction de bactéries qui assurera la protection de l'os péri-implantaire. Les risques de descellement de l'implant seront donc considérablement réduits.

L'invention concerne donc une pièce destinée à être utilisée en association avec un implant dentaire, qui est lui-même destiné à être fixé dans une mâchoire, cette pièce comportant successivement depuis son extrémité distale et en direction de son extrémité proximale, une portion distale de fixation dans l'implant, une portion intermédiaire d'accroche aux tissus épithélial et/ou conjonctif et une portion proximale, cette pièce comportant également au moins deux zones dont les surfaces présentent une structure différente l'une de l'autre, la structure de la surface d'au moins l'une de ces deux zones, située dans la portion intermédiaire, étant ordonnée et répétitive, adaptée à la croissance du tissu épithélial et/ou du tissu conjonctif et présentant des gravures formant des ondulations et dont la profondeur est inférieure à 0,5 microns et des micro-colonnes recouvertes par les gravures formant des ondulations, cette structure favorisant la croissance du tissu épithélial ainsi que sa fixation sur la pièce.

Cette pièce peut être un pilier prothétique, solidaire de l'implant ou destiné à être fixé dans celui-ci, ou une vis de cicatrisation.

Les cellules qui se développent sur la surface de cette première zone vont orienter leur croissance avec un cytosquelette en forme d'étoile, spécifique des cellules épithéliales, ce qui conduit à la formation des fibres du tissu épithélial, lesquelles s'accrochent sur la surface du pilier.

Ainsi, la pièce permet de créer une première barrière pour les bactéries qui sera la plus éloignée de l'os dans lequel l'implant est ancré.

Par ailleurs, il est également préféré qu'en complément de cette première zone, la pièce comporte une deuxième zone dont la surface présente une structure différente de celle de la première zone et qui, quant à elle, va favoriser la croissance du tissu conjonctif et sa fixation sur la pièce, cette deuxième zone étant également située dans la portion intermédiaire de la pièce, entre la portion distale et la première zone de la portion intermédiaire.

Les cellules qui se développent sur la surface de cette deuxième zone vont orienter leur croissance avec un cytosquelette en forme allongée, spécifique aux cellules fibroblastiques à l'origine du tissu conjonctif, lequel comporte des fibres orientées sensiblement radialement ou perpendiculairement par rapport à cette surface.

Ces fibres sensiblement radiales formées dans le tissu conjonctif forment ainsi une zone de renforcement pour l'attache épithéliale, comme cela est constaté pour une dent naturelle.

On peut également prévoir, à l'intérieur de cette deuxième zone, au moins une autre zone espacée de la première zone mais présentant une surface dont la structure a une fonction similaire à celle de la première zone. Cette autre zone présente donc une structure différente de celle de la deuxième zone.

Cette autre zone permet de créer, à l'intérieur d'une région du tissu conjonctif en regard de cette deuxième zone, un point d'attache du type épithélial, entre l'attache épithéliale proprement dite et l'os.

La structure de ladite éventuelle autre zone, prévue à l'intérieur de la deuxième zone, peut notamment comporter des micro-colonnes recouvertes par lesdites gravures formant des ondulations.

Ainsi, l'invention permet de diriger et contrôler les attaches des tissus épithélial et conjonctif sur cette pièce, qu'elle soit un pilier implantaire ou une vis de cicatrisation. Ceci permet de créer un joint biologique autour de l'implant, similaire à celui qui existe pour une dent naturelle, lequel protège l'os.

Dans d'autres modes de mise en oeuvre avantageux, on a de plus recours à l'une ou à l'autre des dispositions suivantes :
- la pièce comporte dans sa portion intermédiaire, une troisième zone dont la surface présente une structure différente de celle de la première zone, cette surface étant texturée pour limiter la fixation de la plaque dentaire, cette troisième zone étant située entre ladite première zone et la portion proximale.

La surface de la troisième zone est hydrophobe.
- la structure de ladite troisième zone peut comporter des nano-piliers.
- Pour une pièce se présentant sous la forme d'un pilier destiné à être fixé dans un implant, ce pilier comporte dans sa portion distale une surface texturée pour assurer la rétention mécanique ou l'étanchéité entre le pilier et l'implant.
- Lorsque la pièce est un pilier prothétique, sa portion proximale comporte une zone de fixation d'un élément prothétique, s'étendant depuis l'extrémité proximale du pilier, cette zone présente une surface dont la structure est texturée pour améliorer la fixation entre le pilier et l'élément prothétique.

La figure 4 est une vue agrandie d'un détail de la figure 2.

La figure 5 est une photographie d'une structure du type MC-LIPSS.

La figure 6 comprend deux diagrammes illustrant les profils de rugosité correspondant à une structure MC-LIPSS.

La figure 7 est une photographie d'une structure du type LIPSS.

La figure 8 comprend deux diagrammes illustrant les profils de rugosité correspondant à une structure du type LIPSS.

La figure 9 est une photographie d'une structure du type NP.

La figure 10 comprend deux diagrammes illustrant les profils de rugosité correspondant à une structure NP.

La figure 11 est une vue en perspective d'un exemple de vis de cicatrisation selon l'invention.

La figure 12 est une vue de la vis illustrée à la figure 11 mise en place dans un implant fixé dans la gencive.

Les éléments communs aux différentes figures seront affectés des mêmes références.

Il est tout d'abord fait référence à la figure 2 qui illustre un exemple d'un pilier prothétique selon l'invention.

Ce pilier 2 comporte successivement depuis son extrémité distale 20 et en direction de son extrémité proximale 21, une portion distale 22 de fixation dans un implant, une portion intermédiaire 23, ainsi qu'une portion proximale 24.

La hauteur de la portion distale 22 peut être d'environ 3 mm, celle de la portion intermédiaire ou sulculaire 23 peut être comprise entre 0,7 et 7 mm et celle de la portion proximale 24 peut être comprise entre 4 et 12 mm.

Cette portion proximale 24 sert à la fixation d'un élément prothétique sur le pilier tandis que la portion intermédiaire 23 permet notamment l'accroche du pilier aux tissus épithélial et conjonctif.

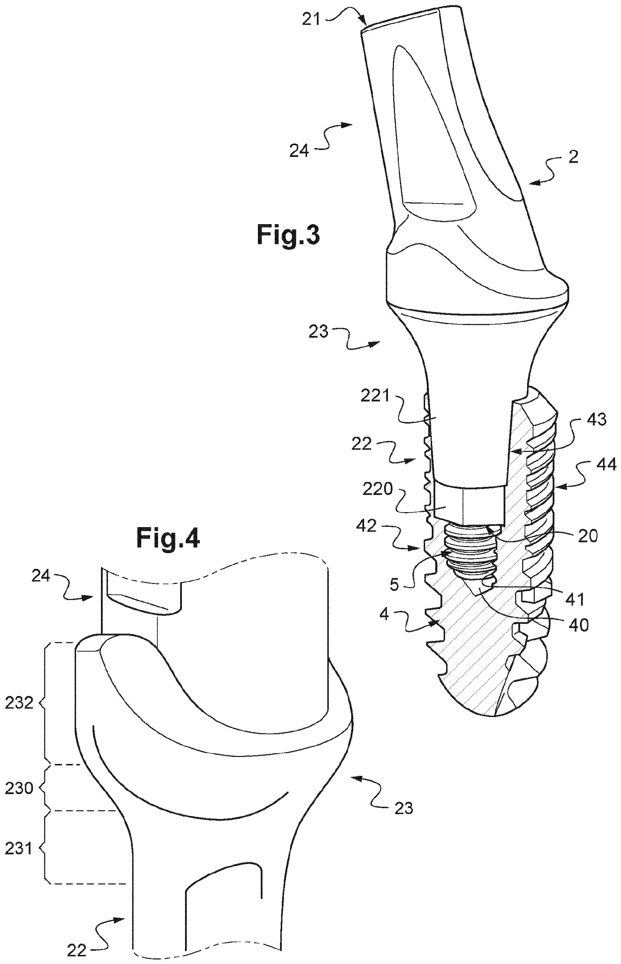

La figure 3 illustre un pilier 2 du type de celui de la figure 2 mis en place dans un implant 4 qui est représenté ici en coupe.

L'implant 4 est muni d'un premier alésage interne borgne 40 comportant sur une portion d'extrémité distale 42 un taraudage 41 et une portion d'extrémité proximale tronconique 43 de jonction avec le pilier 2.

L'implant comporte un filetage 44 sur sa face extérieure.

La portion distale 22 du pilier comporte depuis l'extrémité distale 20, une première partie 220 et une deuxième partie 221.

De façon connue, la deuxième partie 221 est tronconique et elle est conçue pour coopérer à frottement avec la portion d'extrémité proximale 43 de l'implant lorsque la jonction entre le pilier et l'implant est complète.

Par ailleurs, la première partie 220 comporte des pans coupés et elle est conçue pour coopérer avec une zone de forme correspondante de l'implant 4, située entre le taraudage 41 et la portion d'extrémité tronconique 43.

Enfin, le pilier 2 est fixé dans l'implant grâce à une vis 5 qui pénètre dans un alésage du pilier pour se visser dans le taraudage 41 de l'implant, grâce au filetage présent sur une portion distale de la vis.

Dans le cadre de l'invention, la structure de la surface de la portion intermédiaire 23 est définie de façon à favoriser l'accroche du pilier aux tissus épithélial et conjonctif.

Il est maintenant fait référence à la figure 4 qui illustre de façon plus détaillée la portion intermédiaire 23 du pilier 2.

En pratique, cette portion intermédiaire peut être décomposée en trois zones :
- une première zone 230 dont la surface présente une structure destinée à favoriser la croissance du tissu épithélial ainsi que sa fixation sur le pilier 2, cette première zone 230 étant encadrée par
- une deuxième zone 231 qui s'étend entre la première zone et la portion distale 22 du pilier, cette deuxième zone présentant une surface dont la structure favorise la croissance du tissu conjonctif, avec des fibres orientées sensiblement radialement, ainsi que sa fixation sur le pilier 2, et par

- une troisième zone 232 qui s'étend entre cette première zone et la portion proximale 24 du pilier, la surface de cette troisième zone étant hydrophobe, de façon à limiter la fixation de la plaque dentaire.

Il convient ici de noter que cette portion intermédiaire 23 ne comporte pas nécessairement trois zones dont la surface présente une structure avec une fonction particulière, telle qu'énoncée ci-dessus.

En pratique, il convient cependant que soit présente au moins une première zone dont la surface présente une structure favorisant la croissance du tissu épithélial ou une deuxième zone dont la surface présente une structure favorisant la croissance du tissu conjonctif avec des fibres orientées sensiblement radialement.

Si une seule de ces zones devait être présente sur le pilier, c'est la première zone qui serait prévue de préférence puisqu'elle permet la création d'un joint biologique autour du pilier et donc permet, de ce fait, de créer une première barrière pour les bactéries au plus près de leur voie d'entrée dans la gencive.

Cette première barrière résulte notamment du fait que les cellules épithéliales se fixent sur le pilier.

Bien entendu, une efficacité encore plus grande est obtenue lorsque les première et deuxième zones sont présentes sur le pilier. En effet, la présence de la deuxième zone permet d'obtenir un tissu conjonctif dont la structure est proche de celui qui existe avec une dent naturelle et qui constitue alors une structure de soutien efficace pour l'attache épithéliale.

Dans cette deuxième zone, les fibres du tissu conjonctif ne s'enroulent pas autour du pilier mais s'étendent sensiblement perpendiculairement ou radialement par rapport au pilier.

Le pilier selon l'invention permet ainsi de reconstituer un environnement cellulaire très proche de celui existant autour d'une dent naturelle.

Enfin, la troisième zone 232, lorsqu'elle est présente, contribue encore à l'efficacité du joint biologique ainsi créé, en limitant la fixation de la plaque dentaire.

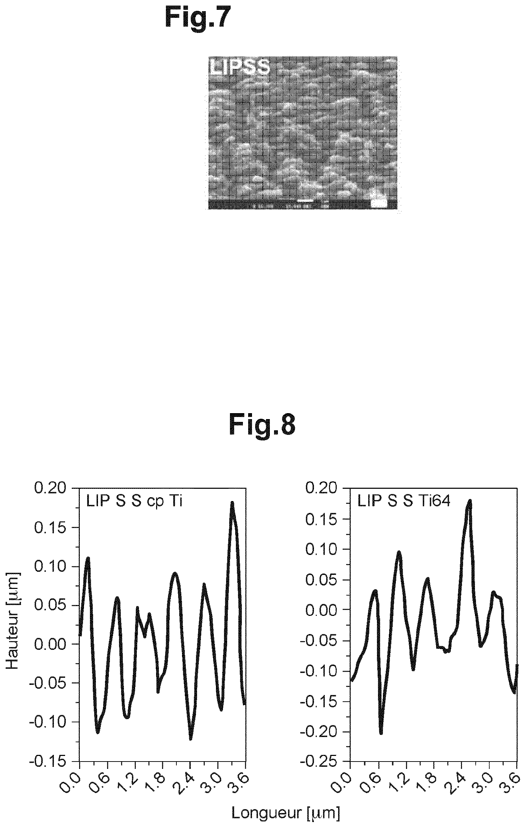

En référence aux figures 7 à 10, vont maintenant être détaillés des exemples de structures de surface permettant de remplir les fonctions qui viennent d'être décrites.

De façon générale, ces structures sont obtenues grâce à un femto-laser, c'est-à-dire un laser produisant des impulsions ultracourtes dont la durée est comprise entre quelques femtosecondes et quelques centaines de femtosecondes.

Elles subissent ensuite une opération de nettoyage.

Un laser de ce type permet d'obtenir des gravures dont la profondeur est de l'ordre du centième de micron et qui sont ordonnées c'est-à-dire non aléatoires, répétitives c'est-à-dire formées d'un motif répété sur cette surface et reproductibles. Il est ainsi possible de conférer à chaque surface et avec certitude la fonction souhaitée en paramétrant de manière appropriée le laser.

De plus, le traitement par un laser de la surface du pilier, effectué avec de l'air, oxyde cette surface. Ceci est notamment dû au niveau de température atteint en surface pendant ce traitement.

Ainsi, lorsque le pilier est réalisé en titane ou en un alliage de titane, le traitement par laser crée une couche d'oxyde de titane qui est une surface biocompatible et plus résistante à la corrosion que le matériau constitutif de départ. De plus, cette couche d'oxyde favorise la minéralisation.

Vont maintenant être décrites des exemples de structures pour les surfaces de chacune des trois zones 230 à 232.

Au niveau de la première zone 230, on pourra prévoir de texturer par laser femtoseconde le pilier de façon à obtenir des micro-colonnes recouvertes de structures de surface périodiques formant des ondulations (ou encore LIPSS, c'est-à-dire Laser-Induced Periodic Surface Structures, dans la terminologie anglaise). Cette structure particulière est désignée par le terme MC-LIPSS dans la terminologie anglaise.

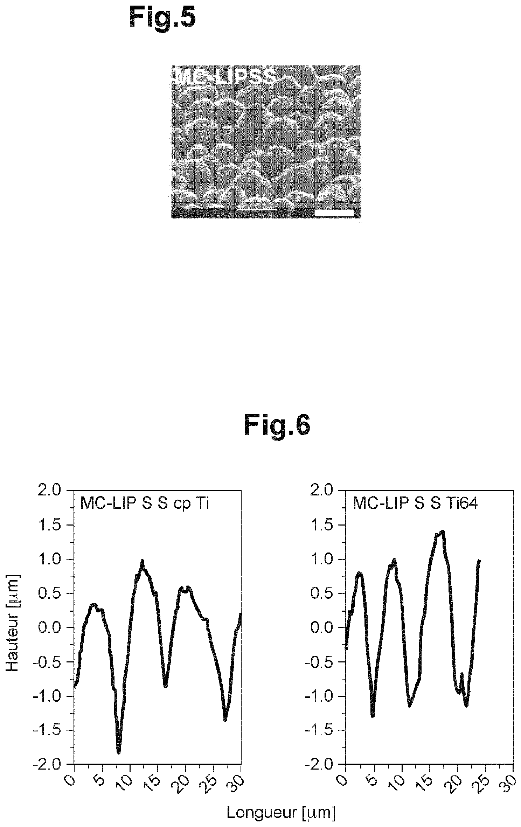

Un exemple d'une structure de surface MC-LIPSS est illustré à la figure 5. Ainsi, cette surface comporte des micro-colonnes dont la section transversale est sensiblement elliptique qui sont recouvertes de structures formant des ondulations (structures LIPSS) dont la périodicité est du même ordre de grandeur que la longueur d'onde de rayonnement du laser ou de quelques centaines de nanomètres. Ainsi, deux ondulations adjacentes sont espacées l'une de l'autre d'une distance comprise entre 500 nm et 1000 nm.

La figure 6 illustre pour deux types de titane, un titane commercialement pur (cp Ti) et pour un alliage de titane (du type Ti6A14V), deux graphes illustrant la variation de la hauteur des rugosités de la surface texturée (en microns), selon une mesure normée du profil linéaire de surface, en fonction de la longueur de l'échantillon (en microns).

Les paramètres de rugosité d'une telle surface ont été mesurés. On rappelle que le paramètre Rₐ donne la rugosité moyenne arithmétique du profil, tandis que le paramètre R_{z} donne la rugosité maximale du profil.

Le paramètre Rₐ (exprimé en microns) est de l'ordre de 0,8 microns pour un substrat en titane et de l'ordre de 0,7 microns pour un substrat en T16A14V.

Par ailleurs le paramètre R_{z} (exprimé en microns) est de l'ordre de 5,3 pour un substrat en titane et de l'ordre de 5,4 pour un support en Ti6A14V.

En pratique, on obtient une texturation avec des micro-colonnes en traitant la surface avec un femto-laser. Sous l'effet du femto-laser, dans un premier temps, apparaissent les structures de surface périodique se présentant sous la forme d'ondulations sensiblement parallèles (LIPSS) et, grâce à l'énergie d'impulsion du femto-laser, les micro-colonnes apparaissent dans un deuxième temps. Elles sont donc recouvertes de structures LIPSS.

De façon préférée, le diamètre de chaque micro-colonne à sa base est compris entre 600 nm et 800 nm.

Cette structure peut s'étendre sur toute la surface de la première zone de manière uniforme.

Cependant, l'invention n'est pas limitée à ce mode de réalisation.

Ainsi, sur la surface de la première zone peut être réalisé un design spécifique, constitué de figures géométriques réparties sous la forme d'une matrice, ces figures pouvant par exemple être un cercle, un carré ou un triangle. Dans cette matrice, deux figures adjacentes sont typiquement espacées d'une distance comprise entre 25 microns et 75 microns. Ces figures définissent l'espace dans lequel se trouvent les micro-colonnes.

En pratique, ces figures géométriques non-aléatoires sont obtenues en concentrant l'énergie d'impulsion du femto-laser dans des zones spécifiques définissant ces formes géométriques.

Les micro-colonnes recouvertes de structures LIPSS sont obtenues dans ces zones, tandis que le reste de la surface est seulement recouvert de structures LIPSS.

L'ensemble de la surface est donc recouvert de structures formant des ondulations du type LIPSS.

Ainsi, ces ondulations recouvrent l'ensemble de la surface de la première zone, que celle-ci comporte ou non des micro-colonnes sur toute sa surface.

De façon préférée, deux ondulations adjacentes sont espacées l'une de l'autre d'une distance comprise entre 500 nm et 1000 nm et présentent une hauteur comprise entre 100 nm et 500 nm.

Dans une variante, on peut prévoir de régler le femto-laser pour concentrer son énergie d'impulsion et ainsi vaporiser localement la surface de la première zone. La structure MC-LIPSS est générée autour de cette vaporisation et ce, sur toute la surface.

Lorsque la structure MC-LIPSS est réalisée selon une matrice, la surface de la première zone qui n'est ni vaporisée, ni recouverte d'une structure MC-LIPSS, est recouverte de structures LIPSS.

On a constaté que ce type de structure favorisait la différenciation et la croissance du tissu épithélial et c'est pourquoi il est prévu dans la première zone 230 de la portion intermédiaire 23.

En ce qui concerne maintenant la deuxième zone 231, on pourra prévoir de texturer sa surface afin que celle-ci présente une structure de type LIPSS (Laser-Induced Periodic Surface Structures dans la terminologie anglaise), c'est-à-dire une structure de surface périodique obtenu par un traitement laser.

Comme indiqué plus haut, ces structures consistent en des ondulations sensiblement parallèles.

Une structure de ce type est illustrée à la figure 7.

La figure 8 est une vue similaire à la figure 6 qui comporte deux graphes, le premier correspondant à du titane pur et le deuxième à un alliage de titane du type Ti6A14V, illustrant la variation de la hauteur des rugosités de la surface (en microns) selon une mesure normée du profil linéaire de surface, en fonction de la longueur (en microns) de l'échantillon.

Comme précédemment, peuvent être calculés les paramètres de rugosité Rₐ et R_{z} pour ce type de structure. On peut ainsi mesurer que Rₐ est sensiblement égal à 0,3 microns pour du titane pur et pour un alliage du type T16A14V et que R_{z} est égal à environ 1,5 microns pour du titane pur et 1,4 microns pour un alliage du type Ti6A14V.

Dans le cadre de l'invention, on retiendra une structure du type LIPSS dont les ondulations sont espacées d'environ 500 nm et, de façon plus générale, dont la périodicité est comprise entre 500 nm et 1000 nm, ces ondulations présentant une hauteur comprise entre 100 nm et 500 nm.

On a pu constater qu'une structure de ce type permet de favoriser la croissance du tissu conjonctif avec des fibres orientées sensiblement radialement.

Comme expliqué précédemment, cette deuxième zone 231 est, de préférence, prévue en complément de la première zone 230 de façon à constituer un support efficace pour l'attache épithéliale dont la formation est favorisée par la texturation particulière de la première zone 230. Cependant, cette deuxième zone 231 pourrait être prévue seule.

À cet égard, il peut être intéressant de prévoir, à l'intérieur de cette deuxième zone 231, une partie de surface présentant une texturation différente et favorisant la formation du tissu épithélial.

Ainsi, cette partie de surface pourra présenter, par exemple de façon annulaire, une texturation identique à celle de la première zone 230 ou, en tout état de cause, une texturation remplissant la même fonction.

La présence de cette autre zone différenciée à l'intérieur de la deuxième zone permet de créer à l'intérieur de celle-ci un point d'attache du tissu épithélial, sous l'attache épithéliale elle-même, ce qui créé une barrière supplémentaire contre l'introduction des bactéries.

Il convient de souligner que les structures de surface décrites en référence aux figures 7 à 10 ne constituent que des exemples de mise en oeuvre de l'invention et que cette dernière n'est pas limitée à ces exemples.

En ce qui concerne maintenant la troisième zone 232 de la portion intermédiaire 23, on pourra prévoir sur sa surface une texturation du type nano-piliers (ou NP dans la terminologie anglaise).

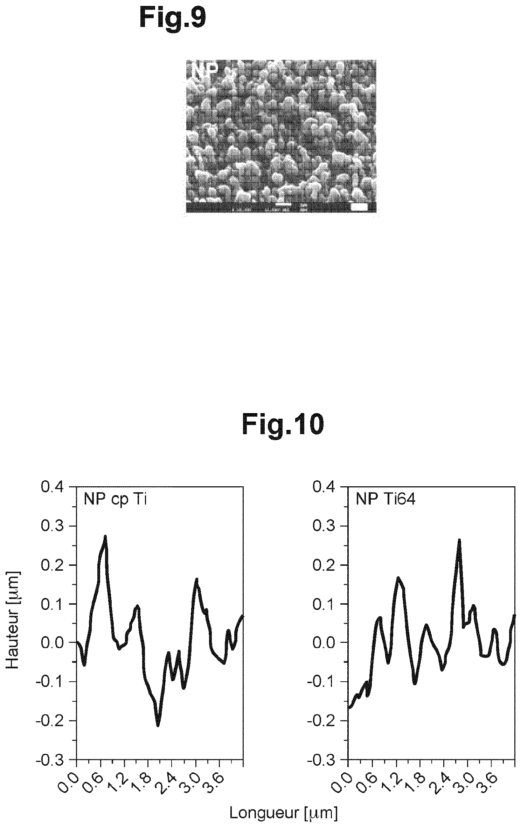

Cette structure est illustrée par la figure 9.

Par ailleurs, la figure 10, comme les figures 6 et 8 décrites précédemment, comporte deux graphes illustrant les profils de rugosité d'une telle texturation, d'une part pour un titane pur et d'autre part pour un alliage de titane du type Ti6A14V.

Chacun de ces graphes donnent la hauteur des rugosités (en microns) selon une mesure normée du profil linéaire de surface, en fonction de la longueur de l'échantillon (en microns).

Les paramètres de rugosité Rₐ et R_{z} ont également été calculés pour ce type de texturation. Ainsi, Rₐ est sensiblement égal à 0,3 microns pour un titane pur et un alliage du type Ti6A14V, tandis que R_{z} est égal à environ 1,6 microns pour un substrat en titane pur et à 1,3 microns pour un substrat en alliage de titane du type T16A14V.

Une structure en nano-piliers de ce type est obtenue grâce à un laser femtoseconde et en deux étapes.

Dans une première étape, la surface du substrat est traitée pour obtenir des structures de surface périodique (du type LIPSS) qui se présentent sous la forme d'ondulations sensiblement parallèles.

Dans cette première étape, les paramètres du laser sont réglés pour qu'ils génèrent 192 impulsions, avec une fluence de 0,3 J/cm². Dans cette première étape, la polarisation du faisceau laser est droite.

La deuxième étape du traitement de la surface est toujours réalisée par un laser femtoseconde mais avec une fluence et un nombre d'impulsions inférieurs. Ainsi, cette deuxième étape peut être réalisée avec un laser paramétré pour générer 47 impulsions, avec une fluence de 0,10 J/cm². Dans cette deuxième étape, la polarisation du faisceau laser est toujours droite mais sa direction est tournée de 90° par rapport à la direction de la polarisation utilisée dans la première étape du traitement de surface.

Ainsi, les ondulations formées lors de la première étape du traitement sont partiellement détruites par la deuxième étape du traitement de façon à former ces nano-piliers.

Cette structure peut s'étendre sur toute la surface de la deuxième zone de manière uniforme.

Cependant, l'invention n'est pas limitée à ce mode de réalisation. Ainsi, la surface de la deuxième zone peut comporter une matrice de plots de forme sensiblement carrée, la structure de nano-piliers étant réalisée sur la surface de chaque plot.

Dans cette matrice, le côté des plots est compris entre 20 microns et 45 microns et deux plots adjacents sont espacés d'une distance comprise entre 20 microns et 35 microns.

On constate que cette structure de surface permet de limiter la formation de biofilm par rapport notamment à une surface polie.

C'est pourquoi ce type de texturation est avantageusement utilisé dans la troisième zone 232.

Cependant, l'invention n'est pas limitée à ce type de texturation.

En particulier, on a pu constater qu'une surface texturée du type LIPSS présente également cette particularité d'éviter la formation de biofilm.

Enfin, et de façon non limitative, tout type de surface hydrophobe peut être utilisé pour cette troisième zone 232, afin d'éviter la formation de biofilm.

On comprend ainsi que cette troisième zone permet de renforcer les effets de la première zone et/ou de la deuxième zone en limitant la présence de bactéries au-dessus de ces deux zones. Elle renforce donc la fonction de barrière biologique déjà remplie par l'une ou l'autre de ces deux zones.

En complément des structures particulières qui sont données à la surface du pilier dans sa portion intermédiaire, l'invention prévoit également de donner aux autres surfaces du pilier des structures particulières afin de leur conférer des fonctions renforcées.

Il est de nouveau fait référence à la figure 2 qui illustre non seulement la portion intermédiaire 23 mais également la portion distale et la portion proximale du pilier.

Comme indiqué précédemment, la portion distale 22 est la portion du pilier qui servira à sa fixation dans l'implant.

De préférence, la structure de la surface de cette portion distale 22 est choisie de façon à améliorer l'étanchéité de la connexion entre le pilier 2 et l'implant.

Cette structure peut également être obtenue grâce à l'action d'un laser femtoseconde. Il peut s'agir notamment d'une structure présentant une accroche micrométrique visant à augmenter la rétention mécanique de liaison (par exemple conique) entre le pilier et l'implant et à améliorer l'étanchéité à l'interface entre les deux pièces.

L'amélioration de l'étanchéité de la connexion entre le pilier et l'implant permet également d'éviter une contamination par des bactéries pathogènes présentes en bouche, lesquelles peuvent conduire à une perte osseuse.

Dans cette partie distale et en particulier dans la première partie 220 la plus distale, on peut prévoir une gravure du pilier, là encore grâce à un laser nanoseconde ou femtoseconde.

Cette gravure peut consister en un code 2D, du type data Matrix, permettant l'identification unique du pilier.

Grâce à cette gravure, il est alors possible de tracer le pilier de manière originale et unique, après sa fixation dans l'implant.

Par ailleurs, la portion proximale 24 du pilier est destinée à la fixation d'une prothèse.

Là encore, on peut prévoir que la surface de cette portion proximale présente une structure particulière, afin d'améliorer la fixation de la prothèse sur le pilier.

À titre d'exemple, cette structure peut être d'une rugosité supérieure à la structure brute usinée afin d'augmenter la rétention du scellement ou du collage de la prothèse sur le pilier.

On comprend ainsi que l'invention propose de donner à la surface de chaque partie du pilier une structure spécifique de façon à lui conférer une fonction particulière ou à améliorer la fonction déjà remplie.

Ces différentes parties du pilier ne sont donc plus passives mais au contraire actives par rapport à leur environnement, qu'il s'agisse ou non d'un milieu vivant.

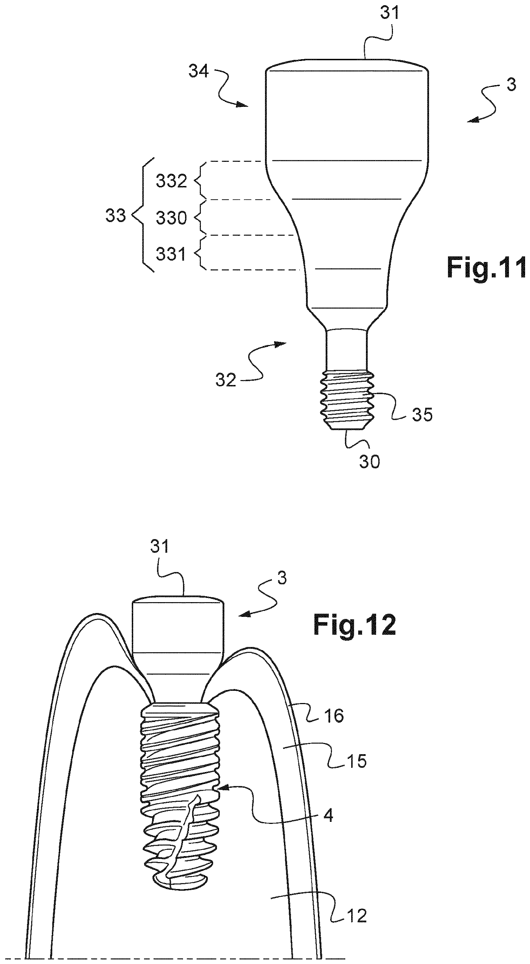

Il va maintenant être fait référence aux figures 11 et 12 qui illustrent une vis de cicatrisation, afin de montrer comment l'invention peut être adaptée à une telle vis.

Sur une telle vis de cicatrisation 3, peuvent également être définies trois portions depuis son extrémité distale 30 jusqu'à son extrémité proximale 31.

Ainsi, la vis 3 comporte une portion distale 32 de fixation dans l'implant 4, cette portion comportant un filetage 35.

Cette portion distale 32 comporte par exemple une zone conique dont la hauteur est d'environ 2 mm et un filetage dont la hauteur est comprise entre 1 et 3 mm, pour un diamètre compris entre 1,2 et 2 mm.

En direction de son extrémité proximale, s'étend une portion intermédiaire 33 dont la hauteur est comprise entre 0,7 et 7 mm et qui est notamment égale à 3 mm. Elle se prolonge par une portion proximale 34 dont la hauteur est comprise entre 1 et 5 mm et qui est notamment égale à 3 mm. Cette dernière correspond à la partie de la vis située en partie hors de la gencive lorsque que la vis de cicatrisation est vissée dans l'implant, lui-même étant fixé dans la mâchoire d'un patient.

À l'intérieur de la portion intermédiaire 33 peuvent être définies trois zones : une première zone 330, encadrée par une deuxième zone 331 et une troisième zone 332. La deuxième zone 331 s'étend entre la première zone 330 et la portion distale 32 de la vis, tandis que la troisième zone s'étend entre la première zone et la portion proximale 34 de la vis.

Comme pour un pilier selon l'invention, la surface de chacune de ces zones est choisie pour présenter une fonction particulière.

Ainsi, la structure de la surface de la première zone 330 sera choisie pour favoriser la croissance du tissu épithélial. Comme décrit précédemment, cette structure pourra notamment être du type MC-LIPSS. Cette structure a déjà été écrite pour un pilier et ne sera pas décrite de nouveau en détail.

De même, la structure de la surface de la deuxième zone 331 sera choisie de façon à favoriser la croissance du tissu conjonctif, avec des fibres orientées sensiblement radialement.

Cette structure pourra notamment être du type LIPSS, comme décrit précédemment pour un pilier.

Enfin, la structure de la surface de la troisième zone 332 sera choisie de façon à ce que cette surface soit hydrophobe et l'on se référa là encore aux exemples donnés précédemment pour un pilier selon l'invention.

De préférence, c'est la première zone 330 qui présente une surface fonctionnalisée de façon à créer une barrière pour les bactéries qui soit la plus éloignée de l'os.

Cette fonction barrière est bien sûr renforcée lorsque la deuxième zone 331 est elle-même fonctionnalisée conformément à l'invention.

Enfin, la troisième zone 332, lorsqu'elle est hydrophobe, permet d'éviter la fixation de la plaque dentaire, ce qui renforce encore la fonction barrière assurée par la première zone 330 et/ou la deuxième zone 331. La fonction de cette troisième zone 332 est donc complémentaire de celle de la première zone et/ou de la deuxième zone.

Comme cela a été décrit pour le pilier 2, à l'intérieur de la deuxième zone 331, peuvent être prévues des parties annulaires dont la surface présente une structure ayant la même fonction que la première zone, c'est-à-dire favoriser la croissance du tissu épithélial. Ceci permet de créer, à l'intérieur de la deuxième zone, des attaches épithéliales en complément de celle déjà créée au niveau de la première zone 330.

La figure 12 montre la vis 3 dans l'implant 4, lui-même fixé dans l'os 12.

Enfin, l'invention n'est pas limitée aux exemples qui viennent d'être décrits et d'autres variantes pourraient être envisagées.

Ainsi, les matériaux constitutifs d'un pilier ou d'une vis de cicatrisation selon l'invention sont typiquement à base de titane, que ce soit du titane commercialement pur ou un alliage de titane. Cependant, d'autres matériaux bio compatibles peuvent être envisagés tels que d'autres alliages métalliques (titane-nobium, titate-ziréone, cobalt-chrome), des céramiques (zircone) ou des plastiques (PEEK, polyéthylène).

## Revendications

1. : Pièce (2, 3) destinée à être utilisée en association avec un implant dentaire (4) qui est lui-même destiné à être fixé dans une mâchoire, cette pièce comportant successivement depuis son extrémité distale (20, 30) et en direction de son extrémité proximale (21, 31), une portion distale (22, 32) de fixation dans l'implant, une portion intermédiaire (23, 33) d'accroche aux tissus épithélial et/ou conjonctif et une portion proximale (24, 34), cette pièce comportant également au moins deux zones dont les surfaces présentent une structure différente, la structure de la surface d'au moins l'une de ces deux zones, située dans ladite portion intermédiaire (23, 33), dite première zone (230, 320), étant ordonnée et répétitive, adaptée à la croissance du tissu épithélial et/ou du tissu conjonctif et présentant des gravures formant des ondulations dont la profondeur est inférieure à 0,5 microns et des micro-colonnes recouvertes par les gravures formant des ondulations, cette structure favorisant la croissance du tissu épithélial ainsi que sa fixation sur la pièce.

2. : Pièce selon la revendication 1, dans laquelle en complément de cette première zone, est prévue une deuxième zone (231, 331) dont la surface présente une structure différente de celle de la première zone (230, 330) et qui favorise la croissance du tissu conjonctif et sa fixation sur la pièce, cette deuxième zone étant située dans la portion intermédiaire de la pièce, entre la portion distale (22, 32) et la première zone (230, 330) de la portion intermédiaire (23, 33).

3. : Pièce selon la revendication 2 dans laquelle, à l'intérieur de cette deuxième zone (231, 331), est prévue au moins une autre zone espacée de la première zone mais présentant une surface dont la structure est ordonnée et répétitive, différente de celle de la deuxième zone, et favorise le taux de croissance du tissu épithélial ainsi que sa fixation sur la pièce.

4. : Pièce selon la revendication 3 dans laquelle ladite autre zone prévue à l'intérieur de la deuxième zone comporte des micro-colonnes recouvertes par les gravures formant des ondulations.

5. : Pièce selon l'une quelconque des revendications 1 à 4, comportant dans sa portion intermédiaire, une troisième zone (232, 332) dont la surface présente une structure différente de celle de la première zone conçue pour limiter la fixation de la plaque dentaire, cette troisième zone étant située entre ladite première zone (230, 330) et la portion proximale (24, 34).

6. : Pièce selon la revendication 5 dans laquelle la surface de la troisième zone est hydrophobe.

7. : Pièce selon l'une des revendications 5 ou 6, dans laquelle la structure de ladite troisième zone (232, 332) comporte des nano-piliers.

8. : Pièce selon l'une quelconque des revendications 1 à 7, se présentant sous la forme d'un pilier prothétique (2) destiné à être fixé dans un implant, ce pilier comportant, dans sa portion distale (22), une surface texturée pour assurer la rétention mécanique ou l'étanchéité entre le pilier et l'implant.

9. : Pièce selon l'une quelconque des revendications 1 à 8, se présentant sous la forme d'un pilier prothétique (2), dont la portion proximale (24) comporte une zone de fixation d'un élément prothétique s'étendant depuis l'extrémité proximale (21) du pilier, cette zone présentant une surface texturée pour améliorer la fixation entre le pilier et l'élément prothétique.

10. : Pièce selon l'une quelconque des revendications 1 à 7 se présentant sous la forme d'une vis de cicatrisation (3).

11. : Pièce selon l'une quelconque des revendications 1 à 10, dont la portion distale (22, 32) présente une zone dont la surface est gravée pour assurer sa traçabilité.

## Patentansprüche

1. Teil (2, 3) zur Anwendung in Verbindung mit einem Zahnimplantat (4) bestimmt, welches wiederum zur Befestigung in einem Kiefer eingerichtet ist, wobei das Teil nacheinander von seinem distalen Ende (20, 30) in Richtung seines proximalen Endes (21, 31) ausgehend einen distalen Abschnitt (22, 32) zur Befestigung im Implantat, einen Zwischenabschnitt (23, 33) zur Verankerung am Epithel- und/oder Bindegewebe und einen proximalen Abschnitt (24, 34) umfasst, wobei das Teil auch mindestens zwei Bereiche umfasst, deren Oberflächen eine unterschiedliche Struktur aufweisen, wobei die Struktur der Oberfläche mindestens einem dieser beiden Bereiche, der sich in dem Zwischenabschnitt (23, 33) befindet, dem sogenannten ersten Bereich (230, 320), geordnet ist und sich wiederholt, an das Wachstum des Epithel- und/oder Bindegewebes angepasst ist und wellenbildende Gravuren aufweist, die weniger als 0,5 Mikrometer tief sind, sowie Mikrosäulen, die von den wellenbildenden Gravuren bedeckt sind, wobei diese Struktur das Wachstum des Epithelgewebes sowie seine Befestigung auf dem Teil fördert.

2. Teil nach Anspruch 1, in welchem ergänzend zu diesem ersten Bereich eine zweite Zone (231, 331) vorgesehen ist, deren Oberfläche eine unterschiedliche Struktur zu der des ersten Bereichs (230, 330) aufweist und die das Wachstum des Bindegewebes und dessen Befestigung auf dem Teil fördert, wobei der zweite Bereich in dem Zwischenabschnitt des Teils zwischen dem distalen Abschnitt (22, 32) und dem ersten Bereich (230, 330) des Zwischenabschnitts (23, 33) gelagert ist.

3. Teil nach Anspruch 2, in welchem innerhalb des zweiten Bereichs (231, 331) mindestens ein weiterer Bereich vorgesehen ist, der von dem ersten Bereich beabstandet ist aber eine Oberfläche mit einer geordneten und sich wiederholenden Struktur aufweist, die sich von der des zweiten Bereichs unterscheidet und die Wachstumsrate des Epithelgewebes sowie seine Befestigung an dem Teil fördert.

4. Teil nach Anspruch 3, in welchem der innerhalb des zweiten Bereichs vorgesehene weitere Bereich Mikrosäulen umfasst, welche von den wellenbildenden Gravuren bedeckt sind.

5. Teil nach einem der Ansprüche 1 bis 4, wobei es in seinem Zwischenabschnitt einen dritten Bereich (232, 332) umfasst, dessen Oberfläche eine Struktur aufweist, die sich von der des ersten, zur Eindämmung der Anhaftung von Zahnbelag ausgebildeten Bereichs unterscheidet, wobei der dritte Bereich zwischen dem ersten Bereich (230, 330) und dem proximalen Abschnitt (24, 34) gelagert ist.

6. Teil nach Anspruch 5, in welchem die Oberfläche des dritten Bereichs wasserabweisend ist.

7. Teil nach einem der Ansprüche 5 oder 6, in welchem die Struktur des dritten Bereichs (232, 332) Nanosäulen umfasst.

8. Teil nach einem der Ansprüche 1 bis 7 in Form eines prothetischen Abutments (2) zur Befestigung in einem Implantat, wobei das Abutment in seinem distalen Abschnitt (22) eine texturierte Oberfläche zur Sicherstellung der mechanischen Retention oder der Abdichtung zwischen dem Abutment und dem Implantat aufweist.

9. Teil nach einem der Ansprüche 1 bis 8 in Form eines prothetischen Abutments (2), dessen proximaler Abschnitt (24) einen Bereich zur Befestigung eines prothetischen, sich vom proximalen Ende (21) des Abutments aus erstreckenden Elements umfasst, wobei dieser Bereich eine strukturierte Oberfläche zur besseren Befestigung des Abutments an dem prothetischen Element aufweist.

10. Teil nach einem der Ansprüche 1 bis 7 in Form einer Narbenschraube (3).

11. Teil nach einem der Ansprüche 1 bis 10, dessen distaler Abschnitt (22, 32) einen Bereich aufweist, dessen Oberfläche graviert ist, um seine Rückverfolgbarkeit zu gewährleisten.

## Claims

1. Component (2, 3) intended to be used in association with a dental implant (4) which is itself intended to be fixed in a jaw, this component comprising successively, from its distal end (20, 30) and in the direction of its proximal end (21, 31), a distal portion (22, 32) for fixing in the implant, an intermediate portion (23, 33) for attachment to epithelial and/or connective tissue, and a proximal portion (24, 34), this component also comprising at least two zones whose surfaces have a different structure, the structure of the surface of at least one of these two zones, situated in said intermediate portion (23, 33), called the first zone (230, 320), being ordered and repetitive, adapted to the growth of the epithelial tissue and/or the connective tissue, and having engravings which form ripples, of which the depth is less than 0.5 micron, and micro-columns covered by the engravings which form ripples, this structure promoting the growth of the epithelial tissue and the attachment of the latter to the component.

2. Component according to Claim 1, in which, in addition to this first zone, a second zone (231, 331) is provided whose surface has a structure different than that of the first zone (230, 330) and which promotes the growth of the connective tissue and the attachment of the latter to the component, this second zone being situated in the intermediate portion of the component, between the distal portion (22, 32) and the first zone (230, 330) of the intermediate portion (23, 33).

3. Component according to Claim 2, in which, inside this second zone (231, 331), there is provided at least one other zone spaced apart from the first zone but having a surface whose structure is ordered and repetitive, different than that of the second zone, and promotes the rate of growth of the epithelial tissue and also the attachment of the latter to the component.

4. Component according to Claim 3, in which said other zone provided inside the second zone comprises micro-columns covered by the engravings which form ripples.

5. Component according to any one of Claims 1 to 4, comprising, in its intermediate portion, a third zone (232, 332) whose surface has a structure different than that of the first zone, designed to limit the attachment of dental plaque, this third zone being situated between said first zone (230, 330) and the proximal portion (24, 34).

6. Component according to Claim 5, in which the surface of the third zone is hydrophobic.

7. Component according to either of Claims 5 and 6, in which the structure of said third zone (232, 332) comprises nanopillars.

8. Component according to any one of Claims 1 to 7, in the form of a prosthetic abutment (2) intended to be fixed in an implant, this abutment comprising, in its distal portion (22), a textured surface for ensuring the mechanical retention or sealing between the abutment and the implant.

9. Component according to any one of Claims 1 to 8, in the form of a prosthetic abutment (2), the proximal portion (24) of which comprises a zone for fixing a prosthetic element, extending from the proximal end (21) of the abutment, this zone having a textured surface in order to improve the fixation between the abutment and the prosthetic element.

10. Component according to any one of Claims 1 to 7, in the form of a healing screw (3).

11. Component according to any one of Claims 1 to 10, the distal portion (22, 32) of which has a zone whose surface is engraved in order to ensure its traceability.
